# EUROPÄISCHE PATENTANMELDUNG

(11) **EP 4 506 437 A1**
(43) Veröffentlichungstag der Anmeldung: **12.02.2025**
(21) Anmeldenummer: 23190945.8
(22) Anmeldetag: 10.08.2023
(51) Int. Cl.: C10L 9/08, C10J 3/46

(54) **VERFAHREN ZUR HERSTELLUNG VON SYNTHESEGAS**

(71) Anmelder: Rosneft Deutschland GmbH, 10117 Berlin (DE)
(72) Erfinder: Ungefug, Igor, 10117 Berlin (DE); Merschel, Ludger, 10117 Berlin (DE); Fuder, Franz, 10117 Berlin (DE); Arndt, Sebastian, 10117 Berlin (DE)
(74) Vertreter: adares Patent- und Rechtsanwälte Reininger & Partner GmbB

(57) **Zusammenfassung**

Die Erfindung betrifft ein Verfahren zur Herstellung von Synthesegas aus einem kohlenstoffhaltigen Aufbereitungsstoff, aufweisend folgende Schritte:
a) Unterziehen des kohlenstoffhaltigen Aufbereitungsstoffs einer hydrothermalen Carbonisierung bei einer ersten Temperatur in einem Bereich von 100 bis 400°C und einem Druck von 20 bis 50 atm (2,027 × 10⁶ Pa bis 5,066 × 10⁶ Pa), um Kohle herzustellen,
b) Vergasen der in Schritt a) hergestellten Kohle bei einer zweiten Temperatur im Bereich von 800 bis 1.500°C unter Verwendung von CO₂ als Vergasungsmittel, um das Synthesegas herzustellen.

## Beschreibung

Die Erfindung betrifft ein Verfahren zur Herstellung von Synthesegas. Insbesondere betrifft die Erfindung ein Verfahren zur Herstellung von Synthesegas aus einem kohlenstoffhaltigen Aufbereitungsstoff.

Synthesegas ist ein Gas mit variablen Anteilen diverser gasförmiger Stoffe, das für eine chemische Synthese verwendbar ist. Das Synthesegas, auch als Syngas bezeichnet, ist insbesondere ein wasserstoffhaltiges brennbares Gas, welches für chemische Synthesen verwendet werden kann, z.B. zur Synthese und somit zur Herstellung von Methanol oder zum Einsatz im Fischer-Tropsch-Verfahren. Ferner kann das Synthesegas als gasförmiger Brenn- oder Kraftstoff dienen.

Synthesegas ist auf vielfältige Weise herstellbar. Ein Weg zur Herstellung von Synthesegas ist eine Vergasung natürlicher oder synthetischer Kohle unter Zugabe von Wasserdampf und Sauerstoff. In der Terminologie der vorliegenden Erfindung fällt unter den Begriff der "Kohle" bevorzugt die auf synthetischem Wege durch einen Verkohlungsprozess aus einem kohlenstoffhaltigen Aufbereitungsstoff hergestellte synthetische Kohle. Anschließend kann diese Kohle beispielsweise unter Einsatz von Sauerstoff einer partiellen Oxidation und Vergasung mit Wasserdampf zu einem Synthesegas-Gemisch aus CO und Wasserstoff umgesetzt werden.

Ferner kann das Synthesegas aus Erdgas oder -öl mittels Dampfreformierung hergestellt werden. Hierbei werden Kohlenwasserstoffe zusammen mit Wasserdampf unter Druck und relativ hohen Temperaturen in Kohlenmonoxid und Wasserstoff umgewandelt.

EP 4 121 496 A1 beschreibt ferner eine Verwendung von Biomasse zur Herstellung von Synthesegas mittels Biomassevergasung. Da die Biomasse eine weniger einheitliche Zusammensetzung aufweist und in Abhängigkeit der zur Herstellung des Synthesegases eingesetzten Biomasse-Zusammensetzung auch unerwünschte Stoffe wie z.B. Schwefel(verbindungen) enthalten kann, wird das so hergestellte Synthesegas unter Verwendung vorbestimmter Mikroorganismen zu Ethanol fermentiert, welche weniger empfindlich gegenüber diesen unerwünschten Stoffen sind als z.B. Katalysatoren. Da dieses Verfahren Biomasse einsetzt, die eigentlich zur Entsorgung vorgesehen ist, ist das Verfahren aus Klima- und Umweltschutzgründen vorteilhaft gegenüber den vorstehend genannten Verfahren zur Herstellung von Synthesegas, zumal Kohle-, Erdgas- und Erdölvorräte endlich sind. Das Verfahren ist jedoch aufwändig und zeitintensiv. Es besteht jedoch ein weiterer Bedarf an einem Verfahren zur Herstellung von Synthesegas, das klima- und umweltfreundlich, aber gleichzeitig zeit- und kosteneffizienter ist. Bei Verwendung kohlenstoffhaltiger Aufbereitungsstoffe, die nicht-fossilen Ursprungs sind, ergibt sich insbesondere daraus eine positive CO₂-Bilanz, dass zum einen aus dem Synthesegas beispielsweise Kraftstoffe erzeugt werden, die man anschließend verbrennt und zum anderen die kohlenstoffhaltigen Aufbereitungsstoffe anders als bisher nicht verbrannt werden uns dabei CO₂ generieren.

Es ist eine Aufgabe der vorliegenden Erfindung, ein Verfahren zur Herstellung von Synthesegas bereitzustellen, das klima- und umweltfreundlich ist und sich als vergleichsweise zeit- und kostengünstig erweist.

Die Erfindung betrifft ein Verfahren zur Herstellung von Synthesegas aus einem kohlenstoffhaltigen Aufbereitungsstoff, aufweisend folgende Schritte:
a) Unterziehen des kohlenstoffhaltigen Aufbereitungsstoffs einer hydrothermalen Carbonisierung bei einer ersten Temperatur in einem Bereich von 100 bis 400°C und einem Druck von 20 bis 50 atm (2,027 × 10⁶ Pa bis 5,066 × 10⁶ Pa), um Kohle herzustellen,
b) Vergasen der in Schritt a) hergestellten Kohle bei einer zweiten Temperatur im Bereich von 800 bis 1.500°C unter Verwendung von CO₂ als Vergasungsmittel, um das Synthesegas herzustellen.

Mittels des erfindungsgemäßen Verfahrens können kohlenstoffhaltige Aufbereitungsstoffe, kosten- und zeiteffizient verwertet werden, so dass sie nicht verbrannt oder anderweitig entsorgt werden müssen und dabei den CO₂-Ausstoß in die Atmosphäre erhöhen. Bei der hydrothermalen Carbonisierung wird der kohlenstoffartige Aufbereitungsstoff bei der ersten Temperatur und dem vorstehenden Druck in Kohle karbonisiert, wobei nährstoffreiches Prozesswasser als weiteres Produkt entsteht, das auch einer weiteren Verwendung zuführbar ist.

Das Verfahren eignet sich für trockene und feuchte Aufbereitungsstoffe, wobei in dem Schritt a) auch Wasser zusetzbar ist, wenn notwendig. Es ist daher keine Trocknung des kohlenstoffhaltigen Aufbereitungsstoffs vor dem Schritt a) notwendig. Vielmehr ist er einsatzbar, wie er anfällt. Die nach dem Schritt a) erhaltene Kohle enthält nach der anschließenden Entwässerung wenig Wasser und eignet sich zum direkten Einsatz in den Schritt b). Zum Beispiel wird die in dem Schritt a) erhaltene Kohle zwischen den Schritten a) und b) z.B. in einer Filterpresse, auf einen vorbestimmten Trockensubstanzgehalt, z.B. 65 bis 70 Gew.-%, entwässert und optional weiterhin getrocknet z.B. unter Einsatz von Wärme. Durch die Umsetzung des kohlenstoffhaltigen Aufbereitungsstoffs zu Kohle wird in den Schritt b) ein Edukt eingesetzt, das eine höhere Energiedichte als der kohlenstoffhaltige Aufbereitungsstoff aufweist und mit geringerem Aufwand als dieser eine Anlage für die Synthesegas-Herstellung transportiert werden kann.

Im Sinn der vorliegenden Erfindung ist unter dem Ausdruck "Aufbereitungsstoff" wiederverwertbares Altmaterial zu verstehen, das zur Aufbereitung vorgesehen ist. Unter dem Ausdruck "Aufbereitung" ist ein Auswerten, Erschließen oder Nutzbarmachen des Stoffs für eine weitere Verwendung oder Anwendung zu verstehen, so dass der Stoff wiederverwendet oder wieder nutzbar gemacht wird.

In einer bevorzugten Ausführungsform liegt die erste Temperatur im Bereich von 150 bis 350°C, bevorzugter 200 bis 300°C. Diese Temperaturen sind zu Durchführung des Schritts a) ausreichend.

Bevorzugt liegt die zweite Temperatur im Bereich von 900 bis 1.400°C, bevorzugter 1.000 bis 1.300°C. In diesem Temperaturbereich wird der Schritt b) besonders effizient durchgeführt.

In einer bevorzugten Ausführungsform weist das Vergasungsmittel im Wesentlichen 100 Vol-% CO₂ auf, d.h. es besteht im Wesentlichen aus CO₂. Das Vergasungsmittel, das oxidierend auf die in Schritt a) erhaltene Kohle wirkt, ist daher im Wesentlichen CO₂. Alternativ bevorzugt weist das Vergasungsmittel einen Anteil an CO₂ und einen Anteil an H₂O und/oder O₂ auf, der kleiner ist als der Anteil an CO₂. Dem CO₂ können daher geringe Mengen an H₂O oder O₂ zugesetzt werden. Bevorzugter weist das Vergasungsmittel ein Gemisch aus 70 bis 99 Vol.-% CO₂ und 1 bis 30 Vol-% H₂O und/oder O₂ auf. Alternativ bevorzugt weist das Vergasungsmittel ein Gemisch aus 80 bis 98 Vol.-% CO₂ und 2 bis 20 Vol-% H₂O und/oder O₂ auf. In dem Schritt b) wird das CO₂ mit der Kohle zu CO umgesetzt. Ferner reagiert die Kohle mit H₂O zu CO und H₂.

In einer bevorzugten Ausführungsform wird dem kohlenstoffhaltigen Aufbereitungsstoff in dem Schritt a) eine Kohlenstoffquelle als Zusatzstoff zugesetzt. Im Sinne der Erfindung ist unter dem Ausdruck "Kohlenstoffquelle" ein Stoff zu verstehen, der einen Kohlenstoffgehalt von über 80 Gew.-%, bevorzugter 85 Gew.-%, noch bevorzugter 90 Gew.-% aufweist. Dadurch kann der in dem Schritt a) eingesetzte kohlenstoffhaltige Aufbereitungsstoff mit Kohlenstoff angereichert werden.

Die kohlenstoffhaltige Ausbereitungsstoff kann in dem Schritt a) zerkleinert oder unzerkleinert eingesetzt werden. Bevorzugt weist der kohlenstoffhaltige Aufbereitungsstoff eine kompostierbare Masse auf. Bevorzugt enthält die kompostierbare Masse Agrar-, Nahrungs-, Lebensmittel-, Tier-, Schlacht-, Gewerbe-, Siedlungs- und/oder Industrieabfälle. Agrar-, Nahrungs-, Lebensmittel-, Tier- und/oder Schlachtabfälle umfassen jedweden verwertbaren pflanzlichen und/oder tierischen Teil, d.h., nicht nur Faser-, sondern auch flüssige Bestandteile, Sehnen-, Knochen-, Gräten-, Krustenteile von Pflanzen oder Tieren, die auch Fische einschließen. Gewerbe-, Siedlungs- und/oder Industrieabfälle können z.B. Pappe, Papier, Gülle, kommunale Abfälle, Papiermühlenreste wie Papiermühlenschlamm, in der Papiermühle gebrauchte Flüssigkeiten und/oder kompostierbare Kunststoffe umfassen.

In einer bevorzugten Ausführungsform weist der kohlenstoffhaltige Aufbereitungsstoff Biomasse auf. Biomasse stellt die gesamte durch Pflanzen oder Tiere erzeugte beziehungsweise anfallende organische Substanz dar, so dass unter dem Ausdruck "Biomasse" eine Stoffmasse der Lebewesen und/oder deren Körper- oder Pflanzenteile zu verstehen ist. Bei der Biomasse handelt es sich bevorzugt um Biomasse aus abgestorbenen und/oder abgetrennten Pflanzenteilen wie z.B. Blätter, Seitensprosse, Zweige und Äste, Laub, Pollen, Spermatozoide, nicht gekeimte Pflanzensporen und/oder -samen, Früchte, Blüten, Wurzeln oder deren Teile, Streu, ganze Tot-Pflanzen und/oder Totholz, und/oder Biomasse aus abgestorbenen und/oder abgetrennten Körperteilen wie z.B. Haare, Felle, Federn, Schuppen, Knochen, Hufe, Hörner, Borsten, Gräten, Sehnen-, Knorpel-, Haut, Innereien, Exuvien, Puppenhüllen, Kokonreste, Eier, Eierschalen, Kadaver oder deren Teile, Tierausscheidungen wie Exkremente. Ferner umfasst die einsetzbare Biomasse Küchen-, Speisen- und sonstige Lebensmittelabfälle.

Zum Beispiel kann der kohlenstoffhaltige Aufbereitungsstoff im Fall eines pflanzlichen Aufbereitungsstoffes einige oder alle pflanzlichen Teile einer Pflanze aufweisen. Wenn der kohlenstoffhaltige Aufbereitungsstoff beispielsweise Zuckerrüben enthält, kann dieser den Rübenkörper, Rübenmasse, Wurzeln, Blätter, Samen, Blüten und/oder Teile davon z.B. auch ausgelaugte Rübenschnitzel, Sirup und/oder Melasse enthalten.

Im Fall eines tierischen Aufbereitungsstoffes kann der kohlenstoffhaltige Aufbereitungsstoff z.B. einige oder alle Körperteile eines Tiers aufweisen. Wenn der kohlenstoffhaltige Aufbereitungsstoff z.B. Kuhabfälle enthält, kann er Knorpel, Sehnen, Euter, Hörner, Fleisch, Fettgewebe, Hufen, Augen, Mark und/oder Teile davon enthalten.

Der kohlenstoffhaltige Aufbereitungsstoff weist bevorzugt mindestens eine Komponente auf, die ausgewählt aus der Gruppe Klärschlamm, Holz, Agrarabfall, Grün-, Gras- und Baumschnitt, Pflanzen, Stroh, Silage, Nahrungsmittelabfall, Tier- und Schlachtabfall, Papierschlamm und/oder Trester und/ oder Kunststoffabfälle. Diese Abfälle weisen einen Kohlenstoffgehalt auf, der für das Verfahren vorteilhaft ist. Agrarabfall weist bevorzugt landwirtschaftlichen Abfall wie pflanzliche Rückstände aus der Landwirtschaft, welche insbesondere aus dem Acker- und Gartenbau stammen und alle Teile von Nutzpflanzen umfassen. Nahrungsmittelabfall weist Küchen-, Speisen-, Lebensmittelabfall in rohem und/oder gekochten Zustand pflanzlichen und/oder tierischen Ursprungs auf. Tier- und Schlachtabfall weisen Küchen-, Speisen- und sonstige tierischen Lebensmittelabfälle sowie sämtliche Teile von Tieren, die Meerestiere wie Fische einschließen.

Bevorzugt weist der kohlenstoffhaltige Aufbereitungsstoff Klärschlamm auf. Bevorzugt ist der Klärschlamm entwässerter und/oder getrockneter Klärschlamm. Vorteile entwässerten und/oder getrockneten Klärschlamms sind eine Reduzierung einer Klärschlammmenge, -gewicht, und eine bessere Förder- und Dosierbarkeit.

Bevorzugt wird der kohlenstoffhaltigen Aufbereitungsstoff in dem Schritt a) als Gemisch zweier verschiedener kohlenstoffhaltiger Aufbereitungsstoffe mit unterschiedlichen Kohlenstoffgehalten, Wassergehalten und/oder Trockensubstanzgehalten eingesetzt. Dadurch kann ein Kohlenstoffgehalt, Wassergehalt und/oder Trockensubstanzgrad in dem Schritt a) eingesetzten Aufbereitungsstoff eingestellt werden. Zum Beispiel kann zur Verwertung und eines Einsatzes eines kohlenstoffhaltiger Aufbereitungsstoff mit relativ niedrigem Kohlenstoffgehalt in dem Schritt a) weiterhin ein kohlenstoffhaltiger Aufbereitungsstoff mit relativ hohem Kohlenstoffgehalt als weitere Kohlenstoffquelle zugesetzt werden. Bevorzugt weist der kohlenstoffhaltige Ausbereitungsstoff eine Mischung aus Klärschlamm und Holz auf. Das Holz wirkt als guter Katalysator für die in dem Schritt s) durchgeführte Verkohlung.

In einer bevorzugten Ausführungsform weist der kohlenstoffhaltige Aufbereitungsstoff einen Kaliumgehalt im Bereich von 0 bis 2,3 Gew.-% auf. Bevorzugt weist der kohlenstoffhaltige Aufbereitungsstoff einen Calciumgehalt im Bereich von 0 bis 8 Gew.-% auf. Diese Gehalte wirken sich vorteilhaft auf die Herstellung eines optimierten Synthesegases auf.

Bevorzugt weist der kohlenstoffhaltige Aufbereitungsstoff einen Kohlenstoffgehalt von 35 bis 77 Gew.-%, bevorzugter 35 bis 50 Gew.-% auf. In diesem Bereich ist das Verfahren besonders effizient ausführbar.

Bevorzugt weist der kohlenstoffhaltige Aufbereitungsstoff einen Wassergehalt im Bereich von 50 bis 80 Gew.-% auf. Für den Einsatz in den Schritt a) kann der kohlenstoffhaltige Aufbereitungsstoff ggf. getrocknet werden.

Das Synthesegas weist bevorzugt CO und H₂ auf. In dem Schritt b) finden bevorzugt folgende Reaktionen statt:

C + CO₂ → 2CO (1)

C + H₂O → CO + H₂ (2)

Das in Reaktionsgleichung (2) als Edukt aufgeführte Wasser kann z.B. als Dampf zugeführt werden.

Bevorzugt liegt ein Verhältnis von CO zu H₂ im Bereich von 1:3 bis 30:1, bevorzugter 1:2 bis 25:1. Diese Verhältnisse sind mit dem Verfahren gut erzielbar.

In einer bevorzugten Ausführungsform wird oder werden der Schritt a) und/oder der Schritt b) unter Verwendung von Überschussstrom durchgeführt. Bevorzugt handelt es sich bei dem Überschussstrom um aus erneuerbaren Energien erzeugten Strom, der gemäß aktuellem Bedarf am Übertragungsnetz angeschlossenen Verbraucher nicht benötigt wird und daher nur weggespeichert oder beispielsweise für das vorliegende Verfahren genutzt werden kann. Der Überschussstrom kann z.B. aus Windkraftanlagen, Solaranlagen oder dergleichen dem Verfahren zugeführt werden, so dass es für die Erzeugung des benötigten elektrischen Stroms nicht erforderlich ist, fossile Brennstoffe einzusetzen.

Weitere Eigenschaften und Vorteile der Erfindung werden im Zusammenhang mit bevorzugten Ausführungsformen beschrieben, die mit Hilfe der nachfolgenden Figur und dem nachfolgenden Beispiel näher erläutert werden.

Es zeigt:

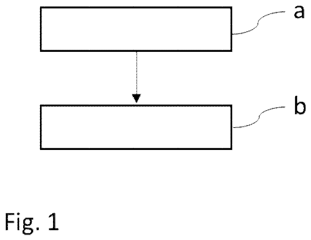

Fig. 1 ein Ablaufdiagramm eines erfindungsgemäßen Verfahrens. Das Verfahren weist einen Schritt a) auf, in dem ein kohlenstoffhaltiger Aufbereitungsstoff wie z.B. Klärschlamm einer hydrothermalen Carbonisierung bei einer ersten Temperatur in einem Bereich von 100 bis 400°C und einem Druck von 20 bis 50 atm (2,027 × 10⁶ Pa bis 5,066 × 10⁶ Pa) unterzogen wird, um Kohle herzustellen. An den Schritt a) schließt sich ein Schritt b) an, in dem die in dem Schritt a) hergestellte Kohle bei einer zweiten Temperatur im Bereich von 800 bis 1.500°C unter Verwendung von CO₂ als Vergasungsmittel vergast wird, um das Synthesegas herzustellen.

### Beispiel

50 t Biomasse mit einem Kohlenstoffgehalt von 45 Gew.-% wurden einer hydrothermalen Carbonisierung bei einer ersten Temperatur von 250°C und einem Druck von 35 atm über eine geeignete Zeitdauer unterzogen. Aus der hydrothermalen Carbonisierung wurden Kohle und Prozesswasser als Produkte erhalten, die durch Filtration voneinander getrennt wurden. Die Kohle wurde weiterhin optional getrocknet. Die aus der hydrothermalen Carbonisierung hergestellte Kohle wurde anschließend bei einer zweiten Temperatur 1200°C unter Verwendung von CO₂ als Vergasungsmittel vergast, wobei weiterhin optional bis zu 30 Vol-% Wasserdampf während der Vergasung dem CO₂ beigemischt wird. Mittels der Vergasung wurde CO- und H₂-haltiges Synthesegas hergestellt, wobei ein Verhältnis von CO zu H₂ 20 : 1 betrug.

## Patentansprüche

1. Verfahren zur Herstellung von Synthesegas aus einem kohlenstoffhaltigen Aufbereitungsstoff, aufweisend folgende Schritte:
a) Unterziehen des kohlenstoffhaltigen Aufbereitungsstoffs einer hydrothermalen Carbonisierung bei einer ersten Temperatur in einem Bereich von 100 bis 400°C und einem Druck von 20 bis 50 atm (2,027 x 10⁶ Pa bis 5,066 × 10⁶ Pa), um Kohle herzustellen,
b) Vergasen der in Schritt a) hergestellten Kohle bei einer zweiten Temperatur im Bereich von 800 bis 1.500°C unter Verwendung von CO₂ als Vergasungsmittel, um das Synthesegas herzustellen.

2. Verfahren nach Anspruch 1, **dadurch gekennzeichnet, dass** die erste Temperatur im Bereich von 150 bis 350°C, bevorzugter 200 bis 300°C liegt und/oder dass die zweite Temperatur im Bereich von 900 bis 1.400°C, bevorzugter 1.000 bis 1.300°C liegt.

3. Verfahren nach Anspruch 1 oder 2, **dadurch gekennzeichnet, dass** das Vergasungsmittel im Wesentlichen 100 Vol-% CO₂ oder ein Gemisch aus 70 bis 99 Vol.-% CO₂ und 1 bis 30 Vol-% H₂O und/oder O₂ oder ein Gemisch aus 80 bis 98 Vol.-% CO₂ und 2 bis 20 Vol-% H₂O und/oder O₂ aufweist.

4. Verfahren nach einem der vorangehenden Ansprüche, **dadurch gekennzeichnet, dass** dem kohlenstoffhaltigen Aufbereitungsstoff in dem Schritt a) eine Kohlenstoffquelle als Zusatzstoff zugesetzt wird.

5. Verfahren nach einem der vorangehenden Ansprüche, **dadurch gekennzeichnet, dass** der kohlenstoffhaltige Aufbereitungsstoff Biomasse, bevorzugt mindestens eine Komponente ausgewählt aus der Gruppe Klärschlamm, Holz, Agrarabfall, Grün-, Gras- und Baumschnitt, Pflanzen, Stroh, Silage, Nahrungsmittelabfall, Tier- und Schlachtabfall, Papierschlamm und/oder Trester und/ oder Kunststoffabfälle aufweist.

6. Verfahren nach Anspruch 5, **dadurch gekennzeichnet, dass** der kohlenstoffhaltige Aufbereitungsstoff Klärschlamm aufweist, bevorzugter eine Mischung aus Klärschlamm und Holz aufweist.

7. Verfahren nach einem der vorangehenden Ansprüche, **dadurch gekennzeichnet, dass** der kohlenstoffhaltige Aufbereitungsstoff einen Kaliumgehalt im Bereich von 0 bis 2,3 Gew.-%, einen Calciumgehalt im Bereich von 0 bis 8 Gew.-% und/oder Kohlenstoffgehalt von 35 bis 77 Gew.-% aufweist.

8. Verfahren nach einem der vorangehenden Ansprüche, **dadurch gekennzeichnet, dass** der kohlenstoffhaltige Aufbereitungsstoff einen Wassergehalt im Bereich von 50 bis 80 Gew.-% aufweist.

9. Verfahren nach einem der vorangehenden Ansprüche, **dadurch gekennzeichnet, dass** das Synthesegas CO und H₂ aufweist.

10. Verfahren nach Anspruch 9, **dadurch gekennzeichnet, dass** ein Verhältnis von CO zu H₂ im Bereich von 1:3 bis 30:1 bevorzugt 1:2 bis 25:1 liegt.

11. Verfahren nach einem der vorangehenden Ansprüche, **dadurch gekennzeichnet, dass** der Schritt a) und/oder der Schritt b) unter Verwendung von Überschussstrom durchgeführt wird oder werden.
